# EUROPEAN PATENT SPECIFICATION

(11) **EP 4 484 843 B1**
(45) Date of publication and mention of the grant of the patent: **08.07.2026**
(21) Application number: 23902154.6
(22) Date of filing: 21.08.2023
(51) Int. Cl.: F24F 13/00

(54) **COUPLER, AIR CONDITIONER INDOOR UNIT, AND AIR CONDITIONER**
KOPPLER, KLIMAANLAGENINNENRAUMEINHEIT UND KLIMAANLAGE
COUPLEUR, UNITÉ INTÉRIEURE DE CLIMATISEUR, ET CLIMATISEUR

(30) Priority: 12.12.2022 CN 202223358210 U
(43) Date of publication of application: 01.01.2025
(73) Proprietor: GD Midea Heating & Ventilating Equipment Co., Ltd., Foshan, Guangdong 528311 (CN); Hefei Midea Heating & Ventilating Equipment Co., Ltd., Hefei, Anhui 230601 (CN)
(72) Inventor: KAN, Changli, Foshan, Guangdong 528311 (CN); GU, Yong, Foshan, Guangdong 528311 (CN); LI, Yunzhi, Foshan, Guangdong 528311 (CN); GE, Shanshan, Foshan, Guangdong 528311 (CN); TANG, Changqing, Foshan, Guangdong 528311 (CN); ZHOU, Baisong, Foshan, Guangdong 528311 (CN); ZHU, Menghao, Foshan, Guangdong 528311 (CN); MA, Mingtao, Foshan, Guangdong 528311 (CN); WEN, Lichao, Foshan, Guangdong 528311 (CN); WU, Lin, Foshan, Guangdong 528311 (CN); FENG, Zhengbo, Foshan, Guangdong 528311 (CN); YAO, Xiao, Foshan, Guangdong 528311 (CN); SHI, Danmei, Foshan, Guangdong 528311 (CN)
(74) Representative: RGTH
(86) International application number: PCT/CN2023/114016
(87) International publication number: WO 2024/124945

(56) References cited:
- WO-A1-2004/010018
- CN-A- 105 202 039
- CN-A- 105 240 416
- CN-A- 107 246 444
- CN-A- 107 246 444
- CN-A- 107 676 397
- CN-A- 108 150 555
- CN-U- 202 100 619
- CN-U- 204 164 022
- CN-U- 219 063 705
- US-A1- 2008 171 603

## Description

### FIELD

The present invention relates to the technical field of air conditioners, and in particular, to a coupler, an air-conditioner indoor unit, and an air conditioner.

### BACKGROUND

When a plurality of wind wheels are comprised in an air-conditioner indoor unit, a motor does not directly drive all the wind wheels. Instead, a driven shaft is provided and connected to some wind wheels, and power transmission is realized by the motor and the driven shaft through a coupler. The coupler in the related art has poor performance and insufficient strength and torsion resistance capacity. CN 105 202 039 A relates to air conditioner technical field, more particularly, relate to a kind of coupling and air conditioner. CN 107 246 444 A relates to connection apparatus field, blower fan, the air conditioner of more particularly to a kind of shaft coupling and the application shaft coupling. CN 107 676 397 A relates to shaft coupling technical field, more particularly to a kind of coupler structure of quick assembling. CN 105 240 416 A belongs to air conditioner technical field, relate to a kind of coupling and air-conditioning internal machine particularly. CN 108 150 555 A relates to connection equipment technical field, more particularly to a kind of shaft coupling.

### SUMMARY

The present invention aims to at least solve technical problems in the related art to some extent. To this end, the present invention provides a coupler.

In order to achieve the above objective, the present invention provides a coupler. The coupler comprises: a sleeve provided with a chamber; a separating portion being elastically deformable and provided in the sleeve to divide the chamber into a first cavity and a second cavity; a first inner core inserted into the first cavity and embedded in the first groove, and adapted to be connected to a driving shaft; and a second inner core inserted into the second cavity and embedded in the second groove, and adapted to be connected to a driven shaft. The separating portion has a first groove opened towards the first cavity and a second groove opened towards the second cavity, and the first groove and the second groove at least partially overlap in a circumferential direction of the sleeve.

In some embodiments of the present invention, the separating portion has a plurality of first grooves and a plurality of second grooves that are alternately arranged in the circumferential direction of the sleeve.

In some embodiments of the present invention, in the circumferential direction of the sleeve, the first groove has a first side surface, and the second groove has a second side surface. Both the first side surface and the second side surface are flat surfaces.

In some embodiments of the present invention, each of the first side surface and the second side surface extends in an axial direction of the sleeve.

In some embodiments of the present invention, the sleeve is elastically deformable; and/or the sleeve and the separating portion are integrally formed.

In some embodiments of the present invention, the sleeve is provided with one of a recess and a protrusion, and the first inner core and the second inner core are provided with the other one of the recess and the protrusion. The protrusion is embedded in the recess to hinder the first inner core and the second inner core from rotating relative to the sleeve.

In some embodiments of the present invention, a plurality of recesses and a plurality of protrusions are provided. The plurality of recesses are arranged at intervals in the circumferential direction of the sleeve, and the plurality of protrusions are arranged at intervals in the circumferential direction of the sleeve.

In some embodiments of the present invention, each of the recess and the protrusion extends in an axial direction of the sleeve.

In some embodiments of the present invention, each of a periphery of an outer end of the first inner core and a periphery of an outer end of the second inner core has a notch, and an end portion of the sleeve is provided with a boss facing towards a central axis of the sleeve. The boss is embedded in the notch.

The present invention also provides an air-conditioner indoor unit. The air-conditioner indoor unit comprises the coupler as described above.

The present invention also provides an air conditioner. The air conditioner includes the air-conditioner indoor unit as described above.

### BRIEF DESCRIPTION OF the DRAWINGS

In order to clearly explain technical solutions of embodiments of the present invention or in the related art, drawings needing to be used in the embodiments or in the related art are briefly described below. Apparently, the drawings as described below are merely some embodiments of the present invention. Based on structures illustrated in these drawings, other designs can be obtained by those skilled in the art without creative efforts.
FIG. 1 is a schematic view of a motor of an air-conditioner indoor unit driving a wind wheel in some embodiments.
FIG. 2 is a schematic view of a connection between a motor and a driven shaft in some embodiments.
FIG. 3 is an exploded schematic view of a driving shaft, a driven shaft, and a coupler in some embodiments.
FIG. 4 is a cross-sectional view of a coupler in some embodiments.
FIG. 5 is an exploded view of a structure illustrated in FIG. 5.
FIG. 6 is a cross-sectional view of a sleeve in some embodiments.

The reference signs are explained as follows:
motor 1000;
motor body 1100, rotation shaft/driving shaft 1200;
wind wheel 2000, first wind wheel 2100, second wind wheel 2200, third wind wheel 2300;
transmission shaft/driven shaft 3000;
coupler 4000;
sleeve 4100, chamber 4110, first cavity 4111, second cavity 4112, boss 4120, central axis 4130;
separating portion 4200, first groove 4210, first side surface 4211, second groove 4220, second side surface 4221, groove wall 4230;
first inner core 4300, protruding portion 4310;
second inner core 4400, protruding portion 4410;
protrusion 5100, recess 5200;
notch 6100, bolt 6200.

Realization, functional features, and advantages of the objectives of the present invention are further described in conjunction with the embodiments and with reference to the accompanying drawings.

### DETAILED DESCRIPTION

The present invention provides a coupler, and the coupler will be described in detail hereinafter in conjunction with an air-conditioner indoor unit. It can be understood that the coupler involved in the present invention is not only limited to its application in the air-conditioner indoor unit, but may also be applied to other products.

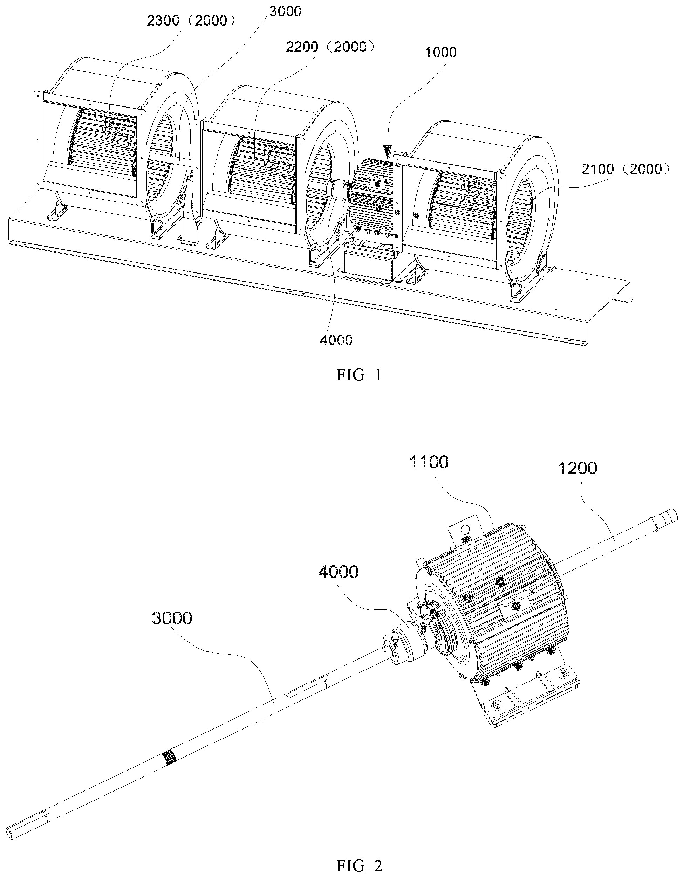

As illustrated in FIG. 1 to FIG. 3, in some embodiments of the present invention, the coupler 4000 includes a sleeve 4100, a separating portion 4200, a first inner core 4300, and a second inner core 4400. The sleeve 4100, the separating portion 4200, the first inner core 4300, and the second inner core 4400 cooperate with each other, which increases a strength of the coupler 4000, improves a torsion resistance strength, and prevents the coupler 4000 from being easily damaged under impact.

It can be understood that in some air-conditioner indoor units with a large size, such as large air-duct-type air-conditioner indoor units, a plurality of air outlets and a plurality of wind wheels 2000 are provided, and each air outlet is correspondingly provided with one wind wheel 2000. Rotation of the wind wheel 2000 is realized under action of the motor 1000, to suck indoor air and output the air through the air outlet. There are various ways to realize driving of the plurality of wind wheels 2000. For example, a separate motor 1000 is provided for each wind wheel 2000, i.e., the wind wheel 2000 and the motor 1000 are in a one-to-one correspondence. Rotation of all the wind wheels 2000 is realized through driving of each motor 1000. However, a significant drawback occurs in such a way, and is that a single motor 1000 is high in cost. When each wind wheel 2000 is provided with the motor 1000, a cost of the entire air-conditioner indoor unit is greatly improved. Moreover, a weight of the motor 1000 is large. In this way, the air-conditioner indoor unit is also caused to be too heavy, which is not conducive to a lifting operation of the air-conditioner indoor unit. Another way for realizing driving of the wind wheels is to provide one motor 1000, and the motor 1000 realizes synchronous rotation of all the wind wheels 2000 by transmission. This way can greatly reduce the cost and a weight of the air-conditioner indoor unit.

For example, three wind wheels 2000 are provided in the air-conditioner indoor unit, and are a first wind wheel 2100, a second wind wheel 2200, and a third wind wheel 2300, respectively. The motor 1000 includes a motor body 1100 and a rotation shaft 1200. The rotation shaft 1200 passes through the motor body 1100 and is exposed from two ends of the motor body 1100. The motor body 1100 may drive the rotation shaft 1200, allowing the rotation shaft 1200 to rotate with taking its extending direction as a rotation axis. The first wind wheel 2100 is fixed to one end of the rotation shaft 1200 and is directly driven by the motor body 1100 through the rotation shaft 1200. The second wind wheel 2200 and the third wind wheel 2300 are fixed by a transmission shaft 3000, i.e., the transmission shaft 3000 passes along a center of the second wind wheel 2200 and a center of the third wind wheel 2300 and is fixed with the second wind wheel 2200 and the third wind wheel 2300. A connection between another end of the rotation shaft 1200 and the transmission shaft 3000 is realized through the coupler 4000. In this way, power outputted by the motor 1000 can be transmitted to the transmission shaft 3000 through the coupler 4000, thereby driving the second wind wheel 2200 and the third wind wheel 2300 to rotate. In this case, the rotation shaft 1200 is regarded as a driving shaft 1200, and the transmission shaft 3000 is regarded as a driven shaft 3000.

The sleeve 4100 of the coupler 4000 is of a cylindrically hollow structure as a whole. In this way, a chamber 4110 having a predetermined accommodation space can be formed. The first inner core 4300 and the second inner core 4400 may be mounted in the chamber 4110 to be fixed to the sleeve 4100. The sleeve 4100 may position and mount the first inner core 4300 and the second inner core 4400, to facilitate subsequent insertion of the driving shaft 1200 into the first inner core 4300 and insertion of the driven shaft 3000 into the second inner core 4400.

A space formed by the sleeve 4100 is provided with the separating portion 4200, which may be regarded as being disposed at an inner wall of the sleeve 4100. The separating portion 4200 and the sleeve 4100 are relatively fixed and cannot be separated. For example, the separating portion 4200 and the sleeve 4100 are two separately prepared components that are combined through connection. The separating portion 4200 and the sleeve 4100 may be fixed to each other by screwing, welding, clamping, and the like. As long as fixing of the separating portion 4200 to the sleeve 4100 can be realized, the separating portion 4200 and the sleeve 4100 may be integrally formed through injection molding or overmolded. When the separating portion 4200 is disposed at the sleeve 4100, the separating portion 4200 divides the chamber 4110 into two parts that are a second cavity 4112 and a first cavity 4111, respectively. The first cavity 4111 and the second cavity 4112 may be configured to be in communication with each other or not be in communication with each other. When the second cavity 4112 and the first cavity 4111 are in communication with each other, the separating portion 4200 is formed as an annularly hollow structure. When the second cavity 4112 and the first cavity 4111 are not in communication with each other, the separating portion 4200 is formed as a closed structure. In addition, the first inner core 4300 is inserted into the first cavity 4111, and the second inner core 4400 is inserted into the second cavity 4112.

Both the first inner core 4300 and the second inner core 4400 are of a cylindrically hollow structure. In this way, the driving shaft 1200 can be inserted into the first inner core 4300, and the driven shaft 3000 can be inserted into the second inner core 4400. It can be understood that the coupler 4000 in the related art may also include the sleeve 4100, the first inner core 4300, and the second inner core 4400. When the driving shaft 1200 is inserted into the first inner core 4300, a bolt 6200 is adopted to sequentially pass through the sleeve 4100 and the first inner core 4300 in a radial direction of the sleeve 4100 from the outside to the inside to abut against the driving shaft 1200, thereby realizing fixation among the driving shaft 1200, the first inner core 4300, and the sleeve 4100. When the driven shaft 3000 is inserted into the second inner core 4400, the bolt 6200 is adopted to sequentially pass through the sleeve 4100 and the second inner core 4400 in the radial direction of the sleeve 4100 from the outside to the inside to abut against the driven shaft 3000, thereby realizing fixation among the driven shaft 3000, the second inner core 4400, and the sleeve 4100. In this way, the power can be transmitted by the driving shaft 1200 via the coupler 4000 to the driven shaft 3000.

In order to enhance torsion resistance performance of the coupler 4000, the separating portion 4200 is provided with a first groove 4210 and a second groove 4220. The first groove 4210 and the second groove 4220 are facing away from each other. The first groove 4210 is opened towards the first cavity 4111 and in communication with the first cavity 4111. The second groove 4220 is opened towards the second cavity 4112 and in communication with the second cavity 4112. Moreover, the first groove 4210 and the second groove 4220 at least partially overlap in a circumferential direction of the sleeve 4100. It can be understood that the circumferential direction of the sleeve 4100 is a direction surrounding a central axis 4130 of the sleeve 4100. The central axis 4130 of the sleeve 4100 may also be understood as a central axis of the first inner core 4300 and a central axis of the second inner core 4400. When the first inner core 4300 is inserted into the first cavity 4111, the first inner core 4300 is also embedded in the first groove 4210, meaning that the first inner core 4300 has a corresponding protruding portion 4310, and the protruding portion 4310 of the first inner core 4300 is embedded in the first groove 4210. When the second inner core 4400 is inserted into the second cavity 4112, the second inner core 4400 is also embedded in the second groove 4220, meaning that the second inner core 4400 has a corresponding protruding portion 4410, and the protruding portion 4410 of the second inner core 4400 is embedded in the second groove 4220. The second groove 4220 and the first groove 4210 overlap in the circumferential direction of the sleeve 4100, meaning that the protruding portion 4310 of the first inner core 4300 and the protruding portion 4410 of the second inner core 4400 also overlap with each other in the circumferential direction of the sleeve 4100, therefore, when the driving shaft 1200 drives the driven shaft 3000 to rotate through the coupler 4000, the driving shaft 1200 drives the first inner core 4300 to have a rotational tendency, and the rotational tendency is that the first inner core 4300 rotates in the circumferential direction of the sleeve 4100. The protruding portion 4310 of the first inner core 4300 and the protruding portion 4410 of the second inner core 4400 overlap in the circumferential direction of the sleeve 4100. Therefore, in the circumferential direction of the sleeve 4100, the first inner core 4300 transmits the power to the second inner core 4400 more effectively, and relative sliding not easily occurs between the first inner core 4300 and the second inner core 4400, which improves the torsion resistance performance of the coupler 4000.

In addition, during an instant of starting and closing of the motor 1000, a significant impact on the second inner core 4400 may be easily generated when the driving shaft 1200 drives the first inner core 4300, and this impact easily causes the coupler 4000 to be damaged. In this embodiment, the separating portion 4200 separates the first inner core 4300 from the second inner core 4400 and the separating portion 4200 is elastically deformable. In this way, the separating portion 4200 has a buffering function, absorbs energy brought by the impact, increases flexibility of the coupler 4000, and avoids the occurrence of damage to the coupler 4000 under the impact. It can be understood that the elastic deformability of the separating portion 4200 may be attributed to its material properties. For example, the separating portion 4200 is made of a rubber material. In this way, the elastic deformation can be realized.

As can be seen from the above, the first groove 4210 and the second groove 4220 are respectively provided on the separating portion 4200 and at least partially overlap in the circumferential direction of the sleeve 4100. In this way, when the first inner core 4300 and the second inner core 4400 are mounted to the sleeve 4100, the first inner core 4300 and the second inner core 4400 also partially overlap in the circumferential direction of the sleeve 4100. In this way, the driving shaft 1200 transmits the power to the second inner core 4400 through the first inner core 4300 more effectively to drive the driven shaft 3000 to rotate. In addition, the first inner core 4300 is separated from the second inner core 4400 by the elastically deformable separating portion 4200, which can realize flexible cushioning, and prevent large impact from being generated and avoid the damage to the coupler 4000 due to the large impact.

In an exemplary embodiment of the present invention, in order to improve reliability of power transmission between the first inner core 4300 and the second inner core 4400 and a structural strength of the coupler 4000, as illustrated in FIG. 1 to FIG. 6, in some embodiments of the present invention, a plurality of first grooves 4210 and a plurality of second grooves 4220 are provided and arranged alternately in the circumferential direction of the sleeve 4100. The driving shaft 1200, when rotating, acts on the first inner core 4300 to drive the second inner core 4400 to rotate, therefore, in a case that the plurality of first grooves 4210 and the plurality of second grooves 4220 are provided, a plurality of protruding portions 4310 of the first inner core 4300 and a plurality of protruding portions 4410 of the second inner core 4400 are also correspondingly provided, making the power transmission between the first inner core 4300 and the second inner core 4400 more reliable.

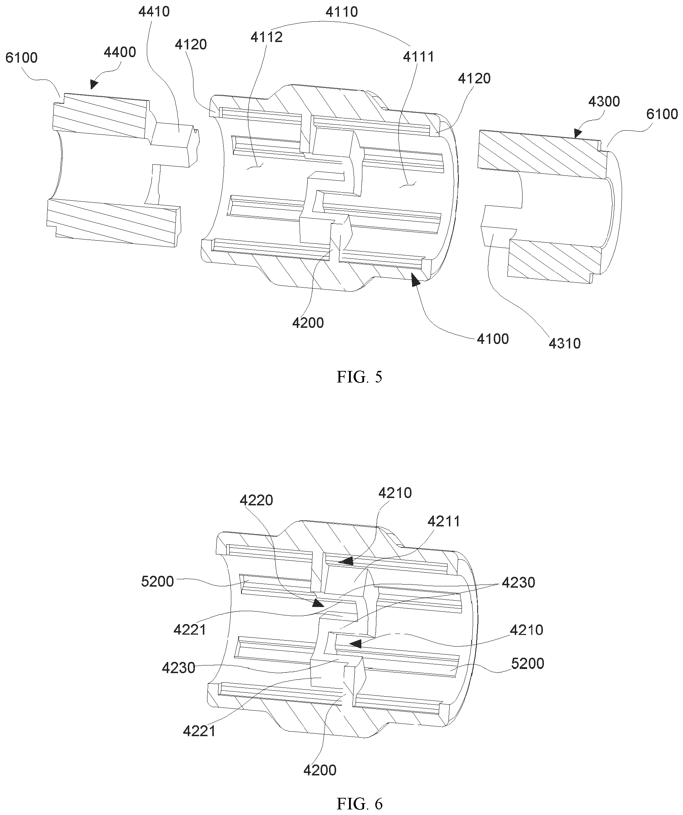

As illustrated in FIG. 6, in some embodiments of the present invention, the first groove 4210 has a first side surface 4211 in the circumferential direction of the sleeve 4100, and the second groove 4220 has a second side surface 4221 in the circumferential direction of the sleeve 4100. It can be understood that the first groove 4210 has the first side surface 4211 formed at each of two opposite sides of the first groove 4210 in the circumferential direction of the sleeve 4100, and the second groove 4220 has the second side surface 4221 formed at each of two opposite sides of the second groove 4220 in the circumferential direction of the sleeve 4100. Therefore, a groove wall 4230 with a predetermined thickness is formed between the first side surface 4211 and the second side surface 4221. When the first inner core 4300 transmits power to the second inner core 4400, the protruding portion 4310 of the first inner core 4300 transmits power to the protruding portion 4410 of the second inner core 4400 by abutting against the groove wall 4230. By designing the first side surface 4211 and the second side surface 4221 to be flat surfaces, a surface contact of the protruding portion 4310 of the first inner core 4300 with the protruding portion 4410 of the second inner core 4400 may be realized with the simplest structure, thereby realizing effective power transmission, and avoiding the damage to the separating portion 4200 by excessive force.

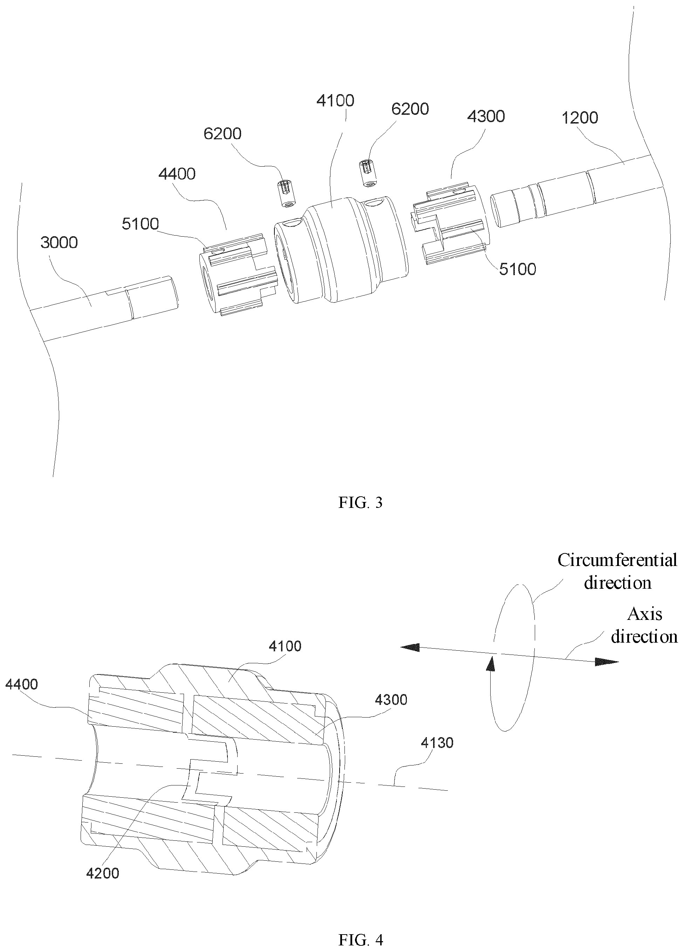

In another exemplary embodiment of the present invention, as illustrated in FIG. 4 and FIG. 6, in some embodiments of the present invention, each of the first side surface 4211 and the second side surface 4221 extends in an axial direction of the sleeve 4100. In this way, in combination with a case where the first side surface 4211 and the second side surface 4221 are both flat surfaces, the protruding portion 4310 of the first inner core 4300 is made more easily embedded into the first groove 4210 when the first inner core 4300 is inserted, and the protruding portion 4410 of the second inner core 4400 is made more easily embedded into the second groove 4220 when the second inner core 4400 is inserted.

In order to effectively realize the mounting and positioning of the first inner core 4300 and the second inner core 4400 into the sleeve 4100, reduce mounting difficulty, and improve overall flexibility performance of the coupler 4000, in some embodiments of the present invention, the sleeve 4100 is also designed to be elastically deformable. In this way, an interference fit of each of the first inner core 4300 and the second inner core 4400 with the sleeve 4100 can be realized when the first inner core 4300 and the second inner core 4400 are mounted to the sleeve 4100, thereby realizing preliminary positioning and fixation among the first inner core 4300, the second inner core 4400, and the sleeve 4100. The sleeve 4100 has a predetermined elasticity, so during the power transmission by the coupler 4000, a predetermined deformation can occur in the sleeve 4100 when cooperating with the power transmission of the driving shaft 1200 and the first inner core 4300 and the second inner core 4400, allowing the flexibility performance of the coupler 4000 to be effectively improved. For example, the sleeve 4100 is also made of a rubber material and may be integrally formed with the separating portion 4200. In this way, not only elastic deformability of the sleeve 4100 and the separating portion 4200 can be realized, but also integrally structural performance between the sleeve 4100 and the separating portion 4200 can be enhanced.

As illustrated in FIG. 3 and FIG. 6, in some embodiments of the present invention, in order to enhance fixation effects among the first inner core 4300, the second inner core 4400, and the sleeve 4100, the first inner core 4300 and the sleeve 4100 are embedded with each other, and the second inner core 4400 and the sleeve 4100 are also embedded with each other, which are realized by a recess 5200 and a protrusion 5100.

Description is made for a case that the first inner core 4300 and the second inner core 4400 are provided with the protrusion 5100, and the sleeve 4100 is provided with the recess 5200, which has a same principle with a case that the first inner core 4300 and the second inner core 4400 are provided with the recess 5200 and the sleeve 4100 is provided with the protrusion 5100, and details are omitted herein. All of the first inner core 4300 and the second inner core 4400 are provided with the protrusion 5100. The sleeve 4100 is provided with the recess 5200 at each of a part of the sleeve 4100 located in the first cavity 4111 and a part of the sleeve 4100 located in the second cavity 4112. When the first inner core 4300 is inserted into the first cavity 4111, the protrusion 5100 is inserted into the recess 5200. When the second inner core 4400 is inserted into the second cavity 4112, the protrusion 5100 is inserted into the recess 5200. It can be understood that the recess 5200 may not form a continuous groove in the circumferential direction of the sleeve 4100. In this way, it is possible to prevent the first inner core 4300 from rotating relative to the sleeve 4100, prevent the second inner core 4400 from rotating relative to the sleeve 4100, and enhance the fixation effects among the first inner core 4300, the second inner core 4400, and the sleeve 4100.

In another exemplary embodiment of the present invention, a plurality of protrusions 5100 and a plurality of recesses 5200 are included and both arranged at intervals in the circumferential direction of the sleeve 4100, and are in a one-to-one correspondence. In this way, effective fixation can each be formed between the first inner core 4300 and the sleeve 4100 and between the second inner core 4400 and the sleeve 4100 in the circumferential direction of the sleeve 4100, connection performance between the first inner core 4300 and the sleeve 4100 and connection performance between the second inner core 4400 and the sleeve 4100 are further improved, and the sleeve 4100 is prevented from being loosened. In particular, the performance is better when both the recess 5200 and the protrusion 5100 are configured to extend in the axial direction of the sleeve 4100.

As illustrated in FIG. 5, in some embodiments of the present invention, each of a periphery of an outer end of the second inner core 4400 and a periphery of an outer end of the first inner core 4300 has a notch 6100, and an end portion of the sleeve 4100 is provided with a boss 4120 facing towards the central axis 4130 of the sleeve 4100. In this way, when the first inner core 4300 is mounted in the first cavity 4111 and the second inner core 4400 is mounted in the second cavity 4112, the boss 4120 may be embedded in the notch 6100, to enhance connection effects between the sleeve 4100 and the first inner core 4300 and between the sleeve 4100 and the second inner core 4400 in the axial direction of the sleeve 4100.

The present invention also relates to an air-conditioner indoor unit. The air-conditioner indoor unit includes the coupler 4000 as described above. A structure of the coupler 4000 of this embodiment refers to the embodiments described above. Since the air-conditioner indoor unit adopts the technical solutions of the embodiments described above, the air-conditioner indoor unit at least has beneficial effects brought by the technical solutions of the embodiments described above, and details are omitted herein.

The present invention also relates to an air conditioner. The air conditioner includes the air-conditioner indoor unit as described above. In an exemplary embodiment of the present invention, an air-conditioner outdoor unit of the air conditioner is connected to the air-conditioner indoor unit to realize refrigerant circulation. A structure of the air-conditioner indoor unit of this embodiment refers to the embodiments described above. Since the air conditioner adopts the technical solutions of the embodiments described above, the air conditioner at least has the beneficial effects brought by the technical solutions of the embodiments described above, and details are omitted herein.

## Claims

1. A coupler (4000), comprising:
a sleeve (4100) provided with a chamber (4110);
a separating portion being elastically deformable and provided in the sleeve (4100) to divide the chamber (4110) into a first cavity (4111) and a second cavity (4112), the separating portion (4200) having a first groove (4210) opened towards the first cavity (4111) and a second groove (4220) opened towards the second cavity (4112);
a first inner core (4300) inserted into the first cavity (4111) and embedded in the first groove (4210), and adapted to be connected to a driving shaft (1200); and
a second inner core (4400) inserted into the second cavity (4112) and embedded in the second groove (4220), and adapted to be connected to a driven shaft (3000),
**characterized in that**
the first groove (4210) and the second groove (4220) at least partially overlap in a circumferential direction of the sleeve (4100).

2. The coupler (4000) according to claim 1, wherein the separating portion (4200) has a plurality of first grooves (4210) and a plurality of second grooves (4220) that are alternately arranged in the circumferential direction of the sleeve (4100).

3. The coupler (4000) according to claim 1, wherein in the circumferential direction of the sleeve (4100), the first groove (4210) has a first side surface (4211), and the second groove (4220) has a second side surface (4221), both the first side surface (4211) and the second side surface (4221) being flat surfaces.

4. The coupler (4000) according to claim 3, wherein each of the first side surface (4211) and the second side surface (4221) extends in an axial direction of the sleeve (4100).

5. The coupler (4000) according to claim 1, wherein:
the sleeve (4100) is elastically deformable; and/or
the sleeve (4100) and the separating portion (4200) are integrally formed.

6. The coupler (4000) according to claim 1, wherein the sleeve (4100) is provided with one of a recess (5200) and a protrusion (5100), and the first inner core (4300) and the second inner core (4400) are provided with the other one of the recess (5200) and the protrusion (5100), the protrusion (5100) being embedded in the recess (5200) to hinder the first inner core (4300) and the second inner core (4400) from rotating relative to the sleeve (4100).

7. The coupler (4000) according to claim 6, wherein a plurality of recesses (5200) and a plurality of protrusions (5100) are provided, the plurality of recesses (5200) being arranged at intervals in the circumferential direction of the sleeve (4100), and the plurality of protrusions (5100) being arranged at intervals in the circumferential direction of the sleeve (4100).

8. The coupler (4000) according to claim 6, wherein each of the recess (5200) and the protrusion (5100) extends in an axial direction of the sleeve (4100).

9. The coupler (4000) according to claim 1, wherein each of a periphery of an outer end of the first inner core (4300) and a periphery of an outer end of the second inner core (4400) has a notch (6100), and an end portion of the sleeve (4100) is provided with a boss (4120) facing towards a central axis (4130) of the sleeve (4100), the boss (4120) being embedded in the notch (6100).

10. An air-conditioner indoor unit, comprising a coupler (4000) according to any one of claims 1 to 9.

11. An air conditioner, comprising an air-conditioner indoor unit according to claim 10.

## Patentansprüche

1. Kupplung (4000), umfassend:
eine Hülse (4100), die mit einer Kammer (4110) versehen ist;
einen Trennbereich (4200), der elastisch verformbar ist und in der Hülse (4100) vorgesehen ist, um die Kammer (4110) in einen ersten Hohlraum (4111) und einen zweiten Hohlraum (4112) zu unterteilen, wobei der Trennbereich (4200) eine erste Nut (4210), die zum ersten Hohlraum (4111) hin offen ist, und eine zweite Nut (4220), die zum zweiten Hohlraum (4112) hin offen ist, aufweist;
einen ersten Innenkern (4300), der in den ersten Hohlraum (4111) eingesetzt und in die erste Nut (4210) eingebettet ist, und der dazu ausgelegt ist, mit einer Antriebswelle (1200) verbunden zu werden; und
einen zweiten Innenkern (4400), der in den zweiten Hohlraum (4112) eingesetzt und in die zweite Nut (4220) eingebettet ist, und der dazu ausgelegt ist, mit einer Abtriebswelle (3000) verbunden zu werden,
**dadurch gekennzeichnet, dass**
sich die erste Nut (4210) und die zweite Nut (4220) in einer Umfangsrichtung der Hülse (4100) zumindest teilweise überlappen.

2. Kupplung (4000) gemäß Anspruch 1, wobei der Trennbereich (4200) eine Vielzahl von ersten Nuten (4210) und eine Vielzahl von zweiten Nuten (4220) aufweist, die in der Umfangsrichtung der Hülse (4100) abwechselnd angeordnet sind.

3. Kupplung (4000) gemäß Anspruch 1, wobei in der Umfangsrichtung der Hülse (4100) die erste Nut (4210) eine erste Seitenfläche (4211) aufweist und die zweite Nut (4220) eine zweite Seitenfläche (4221) aufweist, wobei sowohl die erste Seitenfläche (4211) als auch die zweite Seitenfläche (4221) ebene Flächen sind.

4. Kupplung (4000) gemäß Anspruch 3, wobei sich sowohl die erste Seitenfläche (4211) als auch die zweite Seitenfläche (4221) in einer axialen Richtung der Hülse (4100) erstrecken.

5. Kupplung (4000) gemäß Anspruch 1, wobei:
die Hülse (4100) elastisch verformbar ist; und/oder
die Hülse (4100) und der Trennbereich (4200) einstückig ausgebildet sind.

6. Kupplung (4000) gemäß Anspruch 1, wobei die Hülse (4100) mit einem einer Aussparung (5200) und einem Vorsprung (5100) versehen ist und der erste Innenkern (4300) und der zweite Innenkern (4400) mit dem jeweils anderen der Aussparung (5200) und dem Vorsprung (5100) versehen sind, wobei der Vorsprung (5100) in die Aussparung (5200) eingebettet ist, um eine Drehung des ersten Innenkerns (4300) und des zweiten Innenkerns (4400) relativ zur Hülse (4100) zu verhindern.

7. Kupplung (4000) gemäß Anspruch 6, wobei eine Vielzahl von Aussparungen (5200) und eine Vielzahl von Vorsprüngen (5100) vorgesehen sind, wobei die Vielzahl von Aussparungen (5200) in Abständen in der Umfangsrichtung der Hülse (4100) angeordnet ist und die Vielzahl von Vorsprüngen (5100) in Abständen in Umfangsrichtung der Hülse (4100) angeordnet ist.

8. Kupplung (4000) gemäß Anspruch 6, wobei sich sowohl die Aussparung (5200) als auch der Vorsprung (5100) in einer axialen Richtung der Hülse (4100) erstrecken.

9. Kupplung (4000) gemäß Anspruch 1, wobei sowohl der Umfang eines äußeren Endes des ersten Innenkerns (4300) als auch der Umfang eines äußeren Endes des zweiten Innenkerns (4400) eine Kerbe (6100) aufweist, und ein Endbereich der Hülse (4100) mit einem Knauf (4120) versehen ist, der in Richtung einer Mittelachse (4130) der Hülse (4100) weist, wobei der Knauf (4120) in die Kerbe (6100) eingebettet ist.

10. Klimaanlagen-Inneneinheit, umfassend eine Kupplung (4000) gemäß einem der Ansprüche 1 bis 9.

11. Klimaanlage, umfassend eine Klimaanlagen-Inneneinheit gemäß Anspruch 10.

## Revendications

1. Un coupleur (4000), comprenant :
un manchon (4100) muni d'une chambre (4110) ;
une partie de séparation élastiquement déformable et prévue dans le manchon (4100) pour diviser la chambre (4110) en une première cavité (4111) et une deuxième cavité (4112), la partie de séparation (4200) comportant une première rainure (4210) ouverte vers la première cavité (4111) et une deuxième rainure (4220) ouverte vers la deuxième cavité (4112) ;
un premier noyau interne (4300) inséré dans la première cavité (4111) et encastré dans la première rainure (4210), et adapté pour être relié à un arbre d'entraînement (1200) ; et
un deuxième noyau interne (4400) inséré dans la deuxième cavité (4112) et encastré dans la deuxième rainure (4220), et adapté pour être relié à un arbre mené (3000),
**caractérisé en ce que**
la première rainure (4210) et la deuxième rainure (4220) se chevauchent au moins partiellement dans une direction circonférentielle du manchon (4100).

2. Le coupleur (4000) selon la revendication 1, dans lequel la partie de séparation (4200) comporte une pluralité de premières rainures (4210) et une pluralité de secondes rainures (4220) qui sont disposées en alternance dans la direction circonférentielle du manchon (4100).

3. Le coupleur (4000) selon la revendication 1, dans lequel, dans la direction circonférentielle du manchon (4100), la première rainure (4210) comporte une première surface latérale (4211), et la deuxième rainure (4220) comporte une deuxième surface latérale (4221), la première surface latérale (4211) et la deuxième surface latérale (4221) étant toutes deux des surfaces planes.

4. Le coupleur (4000) selon la revendication 3, dans lequel chacune de la première surface latérale (4211) et de la deuxième surface latérale (4221) s'étend dans une direction axiale du manchon (4100).

5. Le coupleur (4000) selon la revendication 1, dans lequel :
le manchon (4100) est élastiquement déformable ; et/ou
le manchon (4100) et la partie de séparation (4200) sont formés d'un seul tenant.

6. Le coupleur (4000) selon la revendication 1, dans lequel le manchon (4100) est muni d'un évidement (5200) ou d'une saillie (5100), et le premier noyau interne (4300) et le deuxième noyau interne (4400) sont munis de l'autre élément parmi l'évidement (5200) et la saillie (5100), la saillie (5100) étant encastrée dans l'évidement (5200) pour empêcher le premier noyau interne (4300) et le deuxième noyau interne (4400) de tourner par rapport au manchon (4100).

7. Le coupleur (4000) selon la revendication 6, dans lequel une pluralité d'évidements (5200) et une pluralité de saillies (5100) sont prévues, la pluralité d'évidements (5200) étant disposée à intervalles réguliers dans la direction circonférentielle du manchon (4100), et la pluralité de saillies (5100) étant disposée à intervalles réguliers dans la direction circonférentielle du manchon (4100).

8. Le coupleur (4000) selon la revendication 6, dans lequel chacun des évidements (5200) et des saillies (5100) s'étend dans une direction axiale du manchon (4100).

9. Le coupleur (4000) selon la revendication 1, dans lequel une périphérie d'une extrémité extérieure du premier noyau intérieur (4300) et une périphérie d'une extrémité extérieure du deuxième noyau intérieur (4400) comportent chacune une encoche (6100), et une partie d'extrémité du manchon (4100) est pourvue d'un bossage (4120) tourné vers un axe central (4130) du manchon (4100), le bossage (4120) étant encastré dans l'encoche (6100).

10. Unité intérieure de climatiseur, comprenant un coupleur (4000) selon l'une quelconque des revendications 1 à 9.

11. Climatiseur, comprenant une unité intérieure de climatiseur selon la revendication 10.
